# FASCICULE DE BREVET EUROPEEN

(11) **EP 1 979 791 B1**
(45) Date de publication et mention de la délivrance du brevet: **29.08.2018**
(21) Numéro de dépôt: 07730889.8
(22) Date de dépôt: 30.01.2007
(51) Int. Cl.: G05B 19/042

(54) **PROCEDE DE PILOTAGE D'UNE STATION DE TRAVAIL ROBOTISEE ET STATION DE TRAVAIL ROBOTISEE CORRESPONDANTE**
VERFAHREN FÜR DEN ANTRIEB EINES ROBOTISIERTEN ARBEITSPLATZ UND ENTSPRECHENDER ROBOTISIERTER ARBEITSPLATZ
METHOD OF DRIVING A ROBOTIZED WORKSTATION AND CORRESPONDING ROBOTIZED WORKSTATION

(30) Priorité: 31.01.2006 FR 0600857
(43) Date de publication de la demande: 15.10.2008
(73) Titulaire: ABB France, 95800 Cergy Saint Christophe (FR)
(72) Inventeur: NEGRE, Bernard, 75013 Paris (FR)
(74) Mandataire: Lavialle, Bruno François Stéphane
(86) Numéro de dépôt international: PCT/FR2007/000171
(87) Numéro de publication internationale: WO 2007/088269

(56) Documents cités:
- EP-A- 0 973 078
- WO-A-91/06050
- WO-A-2004/055609
- US-A- 6 078 320
- GERTZ M W ET AL: "A HUMAN-MACHINE INTERFACE FOR DISTRIBUTED VIRTUAL LABORATORIES" IEEE ROBOTICS & AUTOMATION MAGAZINE, IEEE SERVICE CENTER, PISCATAWAY, NJ, US, vol. 1, no. 4, 1 décembre 1994 (1994-12-01), pages 5-13, XP000487137 ISSN: 1070-9932

## Description

La présente invention concerne un procédé de pilotage d'une station de travail automatisée et une station de travail correspondante. L'invention s'applique notamment à une ligne automatisée d'assemblage de carrosseries de véhicules automobiles.

### ARRIERE PLAN DE L'INVENTION

Une ligne automatisée de production de pièces comprend généralement une succession de stations de travail comprenant des unités opérationnelles reliées à un automate de pilotage. Il existe de très nombreux types d'unités opérationnelles et par exemple : les robots de manutention, les robots de soudage, les machines automatiques d'usinage, les outils de maintien en position, les convoyeurs, les moyens mobiles de positionnement, les organes de serrage... Dans chaque station de travail, les unités opérationnelles sont agencées et commandées pour réaliser en commun sur une ou des pièces un travail résultant d'un enchaînement d'actions réalisées par les unités opérationnelles. L'automate de pilotage exécute un programme de pilotage assurant la coordination et la synchronisation des unités opérationnelles et déclenche les actions à réaliser par chaque unité opérationnelle. Des actions peuvent être réalisées successivement ou simultanément par plusieurs unités opérationnelles, dans ce cas les unités opérationnelles agissent pendant un temps de façon simultanée et indépendante, jusqu'au moment ou leurs actions respectives sont terminées.

Le programme de pilotage est élaboré spécialement pour chaque station de travail en fonction des besoins de l'utilisateur de la station de travail. L'élaboration du programme comprend une étape d'écriture du programme en un langage évolué ou langage utilisateur et une étape de compilation dans laquelle le programme en langage évolué est traduit en un langage machine. L'élaboration du programme et notamment l'étape de compilation sont relativement longues et demandent des ressources informatiques relativement importantes. Dans ce mode de fonctionnement, le programme doit être réécrit en tout ou partie pour chaque nouvelle station de travail ou pour toute modification d'une station de travail existante. Or, un tel programme de pilotage est relativement complexe, et ce d'autant plus que le nombre de robots est élevé, la coordination et la synchronisation des mouvement, fonctions et actions des robots s'avérant délicate, de sorte que la réécriture de tout ou partie du programme requiert un haut niveau de qualification. Une intervention sur le programme est donc relativement longue et coûteuse, c'est-à-dire pénalisante lorsque des impératifs de flexibilité doivent être respectés. La demande de brevet international WO-A1-91/06050 décrit un tel système.

### OBJET DE L'INVENTION

Il serait donc intéressant de disposer d'un moyen permettant de simplifier mise en oeuvre du pilotage d'une station de travail automatisée.

### RESUME DE L'INVENTION

A cet effet, on prévoit, selon l'invention, un procédé de pilotage d'une station de travail comprenant des unités opérationnelles comprenant un robot comme un robot de soudage, les unités opérationnelles étant reliées à un automate de pilotage exécutant un programme de pilotage, le programme de pilotage comportant pour chaque unité opérationnelle au moins une sous-partie définissant une pluralité d'enchaînements d'actions en fonction d'états de synchronisation, le procédé de pilotage comportant une phase de configuration et une phase d'exécution du programme de pilotage, la phase de configuration comportant les étapes de sélectionner les unités à mettre en oeuvre, de paramétrer les sous-parties correspondantes en sélectionnant l'enchaînement d'actions à réaliser et les états de synchronisation associés, la phase d'exécution comprenant l'étape d'exécuter le programme de pilotage ainsi configuré.

Ainsi, la compilation du programme n'est réalisée qu'une fois et peut être commune à des stations de travail réalisant des travaux différents. Une modification du travail réalisé dans la station peut être facilement réalisée en reconfigurant le programme de pilotage.

L'invention a également pour objet une station de travail comprenant des unités opérationnelles reliées à un automate de pilotage commandé par un programme de pilotage, le programme de pilotage comportant pour chaque unité opérationnelle au moins une sous-partie d'une pluralité d'enchaînements d'actions et des moyens de paramétrage des sous-parties.

Cette station de travail permet une mise en oeuvre du procédé de l'invention.

D'autres caractéristiques et avantages de l'invention ressortiront à la lecture de la description qui suit d'un mode de mise en oeuvre particulier non limitatif de l'invention.

### BREVE DESCRIPTION DES DESSINS

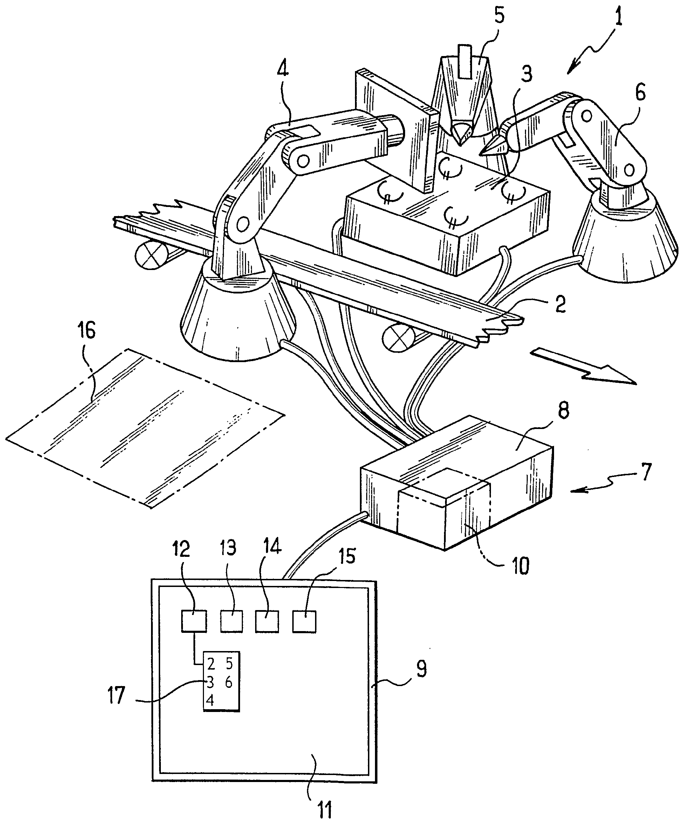

Il sera fait référence à la figure unique annexée représentant schématiquement une station de travail conforme à l'invention.

### DESCRIPTION DETAILLEE DE L'INVENTION

En référence à la figure, la station de travail conforme à l'invention, généralement désignée en 1, comprend une pluralité d'unités opérationnelles, à savoir un convoyeur 2, un outil 3 de positionnement, un robot manipulateur 4, un robot de soudage 5 et un robot de soudage 6. Les unités opérationnelles incorporent de façon connu en soi des actionneurs et des capteurs qui sont reliés (par exemple par un bus) à un automate de pilotage 7 comportant une unité informatique 8 qui est reliée à un dispositif d'entrée/sortie formé ici d'un afficheur tactile 9 et qui est agencée pour exécuter un programme de pilotage contenu dans une mémoire 10 de l'unité informatique 8. Les robots ci-dessus mentionnés sont des robots industriels à six axes offrant un maximum de possibilités d'intervention et de flexibilité. Le robot manipulateur 4 à six axes peut ainsi présenter les pièces aux robots de soudage dans une position optimale. Les unités opérationnelles et l'automate de pilotage sont connus en eux-mêmes et ne seront pas décrits en détail.

Les unités opérationnelles sont agencées pour enchaîner des actions.

Le convoyeur 2 et le robot manipulateur 4 réalisent des actions selon trois enchaînements A, B, C.

Dans l'enchaînement A, le convoyeur 2 doit attendre la pièce à travailler en une position d'entrée dans la station de travail pour l'amener en une position intermédiaire voisine de l'outil de positionnement 3. Le robot manipulateur 4 doit prendre la pièce sur le convoyeur 2 en position intermédiaire pour la déposer dans l'outil de positionnement 3 puis, après soudage par les robots 5 et 6, retirer la pièce de l'outil de positionnement 3 pour la reposer sur le convoyeur 2. Le convoyeur 2 doit attendre la pièce en position intermédiaire pour l'amener en une position de sortie de la station de travail.

Dans l'enchaînement B, le robot manipulateur 4 doit saisir une pièce dans une zone 16 externe à la station pour l'amener sur l'outil de positionnement 3 puis, après soudage, déposer la pièce sur le convoyeur 2. Le convoyeur 2 doit attendre la pièce en position intermédiaire pour l'amener en une position de sortie de la station de travail 1.

Dans l'enchaînement C, le convoyeur 2 doit attendre la pièce à travailler en une position d'entrée dans la station de travail pour l'amener en position intermédiaire. Le robot manipulateur 4 doit saisir la pièce sur le convoyeur 2 pour la déposer sur l'outil de positionnement 3 et, après soudage, saisir la pièce sur l'outil de positionnement 3 pour la déposer dans la zone 16 externe à la station de travail 1.

Dans ces enchaînements, l'outil de positionnement 3 serre la pièce lorsqu'il la détecte et la desserre lorsque le soudage est terminé.

Dans chacun de ces enchaînements, les robots de soudage 5, 6 peuvent réaliser des actions selon trois enchaînements D, E, F à savoir :
- une fois la pièce en position sur l'outil de positionnement 3, le robot 5 intervient en premier et le robot 6 intervient une fois que le robot 5 a terminé (enchaînement D),
- une fois la pièce en position sur l'outil de positionnement, les robots 5 et 6 interviennent simultanément (enchaînement E),
- une fois la pièce en position sur l'outil de positionnement, le robot 6 intervient en premier et le robot 5 intervient une fois que le robot 6 a terminé (enchaînement F).

On notera que lorsque des actions de plusieurs unités opérationnelles doivent être réalisées indépendamment et en parallèle, l'enchaînement avec les actions suivantes est réalisé lorsque que les actions précédentes sont toutes accomplies.

Les enchaînements d'actions de chaque unité opérationnelle font l'objet d'une sous-partie du programme de pilotage. Les actions sont synchronisées les unes par rapport aux autres en fonction de l'état qu'au moins une unité opérationnelle doit avoir pour que débute une action ultérieure d'une unité opérationnelle en interaction (cet état est appelé état de synchronisation).

Pour adapter la station de travail 1 au travail à réaliser, le procédé de pilotage comprend une phase de configuration du programme de pilotage. La configuration du programme est réalisée après la compilation de celui-ci de sorte que la compilation n'est réalisée qu'une fois pour toutes et que le programme est exécutable dès la configuration terminée, sans compilation ultérieure. La phase de configuration comprend l'étape de sélectionner les unités opérationnelles à mettre en oeuvre, sélectionner les séquences d'actions à réaliser par chaque unité opérationnelle et sélectionner les états de synchronisation respectifs si nécessaire. Les unités opérationnelles, les séquences d'actions et les états de synchronisation constituent des variables ou paramètres du programme de pilotage.

A titre d'exemple, on sélectionne l'enchaînement A du convoyeur 2 et du robot de manutention 4 et l'enchaînement E des robots de soudage 5 et 6.

La phase de configuration est mise en oeuvre au moyen d'une routine informatique du programme de pilotage qui est agencée pour permettre une modification des paramètres dudit programme et pour afficher sur l'afficheur tactile 9 une page d'écran de saisie 11 des valeur des paramètres. La page d'écran de saisie 11 comporte des champs 12, 13, 14, 15 correspondant pour chaque unité opérationnelle respectivement aux paramètres modifiables.

Par action, on entend soit une phase active de l'unité opérationnelle, par exemple un serrage ou un soudage, ou une phase passive de l'unité opérationnelle telle qu'une attente de l'évènement qui va déclencher son entrée en action, ou bien encore une mémorisation de la réalisation de tout ou partie de l'ensemble des actions à réaliser par une unité opérationnelle.

En général l'évènement déclencheur de la réalisation d'une action par une unité opérationnelle est la fin d'une action d'une autre ou de la même unité opérationnelle.

Lorsque l'évènement déclencheur est systématique et obligatoire par exemple pour des questions de sécurité, le programme de pilotage est prédéfini de façon à ce que l'évènement déclencheur n'ait pas à être indiqué. Tel est le cas notamment de l'action de validation effectuée par l'opérateur de chargement de pièce à chaque fois qu'il a chargé une pièce et qu'il a dégagé la zone d'intervention des unité opérationnelles.

Pour une action les paramètres modifiables sont généralement :
- le numéro de l'étape,
- l'action à. réaliser ou l'état dans lequel se trouve l'unité à la fin de l'action,
- l'identification de l'unité opérationnelle qui réalise l'action,
- le lieu de l'action, par exemple sous la forme de l'identifiant d'une unité opérationnelle telle qu'un outil assurant le positionnement d'une pièce à travailler.

Pour une attente, les paramètres modifiables sont:
- le numéro de l'étape,
- l'identification de l'unité opérationnelle en attente,
- l'identification de l'unité opérationnelle réalisant l'étape dont la fin est attendue,
- le numéro de l'étape de l'unité opérationnelle dont la fin déclenchera l'action enchaînée suivante.

Pour une mémorisation, les paramètres sont :
- le numéro de l'étape,
- le lieu de l'action, par exemple sous la forme de l'identifiant d'une unité opérationnelle telle qu'un outil assurant le positionnement d'une pièce à travailler.

S'il n'est pas nécessaire d'attendre un état particulier pour passer à l'action suivante de l'unité opérationnelle dont on renseigne l'enchaînement des actions, alors les champs désignant l'évènement attendu et l'unité opérationnelle à l'origine de cet évènement, ne sont pas renseignés.

Il est possible bien entendu de prévoir d'autres paramètres modifiables comme des durées de temporisation dans les phases d'attente, des types de pièces différents mettant en jeu des serrages ou positionneurs différents.

Lorsque l'utilisateur indique qu'il veut entrer une valeur dans un des champs 12, 13, 14, 15 (en appuyant sur la zone de l'afficheur tactile 9 correspondant au champ), la routine affiche un menu contextuel 17 à choix multiple qui présente les différents enchaînements prédéfinis pour le type d'unité opérationnelle choisi. La sélection s'effectue par appui sur la zone de l'afficheur tactile 9 correspondant à la possibilité sélectionnée.

A partir des valeurs de champ sélectionnées, la routine paramètre la ou les sous-parties du programmes de pilotage correspondant à l'unité opérationnelle en cours de configuration. Ce paramétrage active la sous-partie correspondante.

Il est ainsi procédé à un entrelacement des actions ou enchaînements d'actions des différentes unités qui permettent aux unités de travailler ensemble.

On comprend que le programme de pilotage incorpore ainsi des sous-parties relatives aux unités opérationnelles correspondant à un grand nombre d'enchaînements d'actions réalisables par les unités opérationnelles que la phase de configuration permet de sélectionner et de paramétrer.

Le procédé de pilotage se poursuit par une phase d'exécution des sous-parties sélectionnées et paramétrées du programme de pilotage ainsi configuré.

Lors de la phase de pilotage, le programme de pilotage commande l'affichage, sur l'afficheur tactile 9, de pages écran similaires à celles présentées lors de la phase de configuration (les champs étant toutefois déjà remplis conformément à la configuration). Afin de permettre un contrôle visuel du bon déroulement du pilotage, le programme de pilotage affiche les actions accomplies et celles en cours lors de la phase d'exécution. L'accomplissement des actions par les unités opérationnelles est signalé par exemple par un changement de couleur sur ces pages écran tandis que les actions en cours de réalisation ou non terminées sont signalées par exemple par un clignotement.

Lorsque l'exécution de l'action dépasse un temps normal d'exécution prédéfini, une alarme visuelle est affichée sur l'écran et/ou un signal d'alarme est envoyé à une station de supervision ou au local du personnel de maintenance via une liaison électrique de type réseau local ETHERNET ou autre.

Par ailleurs, est commandé l'affichage d'une aide en ligne permettant la visualisation du contenu de fichiers sur l'écran pour chercher la cause possible du retard et résoudre le problème qui s'est posé.

Le fichier en question est par exemple une image 2D ou 3D de l'unité opérationnelle dont le système attend un évènement ou une fin d'action. Sur cette image un pointeur est avantageusement affiché pour désigner le composant dont un changement d'état est attendu (comme le capteur fin de course d'un vérin, un dispositif de sécurité...). Lesdits fichiers peuvent également contenir :
- le schéma électrique de l'unité,
- les plans de la structure de l'unité,
- toute autre information utile à la reprise du séquencement des actions.

De préférence, une autre fenêtre est affichée, pour consulter l'historique des messages d'erreurs avec leur date d'émission. D'autres fenêtres peuvent en outre être affichées pour accéder :
- à l'historique des états (arrêté, en fonctionnement normal, en attente de pièces...),
- aux courbes et autres indicateurs statistiques de performance des stations et/ou unités opérationnelles,
- aux fichiers d'erreurs stockés dans les armoires de commandes des robots et autres unités opérationnelles (lorsque les unité opérationnelles incorporent des armoires de commande reliées à un réseau informatique).

Il va de soi que le mode de mise en oeuvre décrit ici est extrêmement simple pour faciliter la compréhension du procédé. En pratique, le nombre d'enchaînements possibles dans une station de travail est plus important, et ce d'autant plus que le nombre d'unités opérationnelles est élevé.

On comprend que le programme de pilotage, avant configuration, est identique pour toutes les stations de travail d'une ligne de production. Ceci augmente la modularité de la ligne et l'interchangeabilité des stations.

Bien entendu, l'invention n'est pas limitée au mode de réalisation décrit et on peut y apporter des variantes de réalisation sans sortir du cadre de l'invention tel que défini par les revendications.

En particulier, la structure de la station de travail est décrite ici uniquement pour permettre une compréhension du procédé et n'est en aucun cas limitative. La station de travail peut ainsi avoir une structure différente de celle décrite et comporter un nombre différent d'unités opérationnelles et/ou des types différents d'unités opérationnelles.

Les sous-parties de programme mentionnées dans la description du mode de réalisation ci-dessus peuvent être soit des parties à proprement parler d'un programme unique, soit des sous-programmes d'un programme principal, soit des programmes esclaves d'un programme maître... Le programme de pilotage peut avoir une structure différente de celle ici décrite.

Les sous-parties de programmes peuvent correspondre à tout ou partie d'un enchaînement d'actions d'une ou plusieurs unités opérationnelles. Les robots utilisés peuvent par exemple comporter un nombre d'axes différent de six.

Il peut être envisagé de mener la phase de configuration à l'extérieur de la station de travail.

Il est possible d'utiliser un dispositif d'entrée/sortie différent d'un écran tactile et par exemple un clavier, une souris et un écran, un écran tactile et un écran de visualisation ou un écran tactile de visualisation... Le dispositif d'entrée/sortie peut être agencé pour être connectable à plusieurs automates afin de configurer les programmes de pilotage de ceux-ci.

## Revendications

1. Procédé de pilotage d'au moins une station de travail (1) comprenant des unités opérationnelles (2, 3, 6) comprenant au moins un robot comme un robot de soudage, les unités opérationnelles étant reliées à un automate de pilotage (7) exécutant un programme de pilotage, le programme de pilotage comportant pour chaque unité opérationnelle au moins une sous-partie définissant une pluralité d'enchaînements d'actions en fonction d'états de synchronisation, le procédé de pilotage comportant, après que le programme de pilotage ait été compilé, une phase de configuration et une phase d'exécution du programme de pilotage, la phase de configuration comportant les étapes de sélectionner les unités à mettre en oeuvre, de paramétrer les sous-parties correspondantes en sélectionnant l'enchaînement d'actions à réaliser et les états de synchronisation associés, la phase d'exécution comprenant l'étape d'exécuter le programme de pilotage ainsi configuré.

2. Procédé selon la revendication 1, dans lequel l'étape de configuration est mise en oeuvre au moyen d'une routine informatique de modification de paramètres du programme de pilotage, agencée pour afficher un écran de saisie (11) de valeurs des paramètres.

3. Procédé selon la revendication 2, dans lequel l'écran de saisie (11) comporte au moins un menu contextuel (17) à choix multiple.

4. Procédé selon la revendication 3, dans lequel l'écran de saisie (11) est affiché sur un afficheur tactile (9).

5. Procédé selon la revendication 2, dans lequel l'étape de configuration est mise en oeuvre sur l'automate de pilotage (7).

6. Procédé selon la revendication 1, dans lequel l'étape de configuration est mise en oeuvre par chargement dans la mémoire de l'automate de pilotage (7) d'un fichier informatique au moyen d'une machine informatique extérieure à la station.

7. Procédé selon la revendication 1, dans lequel le programme de pilotage est agencé pour afficher, lors de la phase d'exécution, les actions accomplies et/ou en cours d'accomplissement.

8. Procédé selon la revendication 1, dans lequel le programme de pilotage avant configuration est identique pour au moins deux stations (1) d'une ligne de production.

9. Station de travail (1) comprenant des unités opérationnelles (2, 3) comprenant au moins un robot, les unités opérationnelles étant reliées à un automate de pilotage (7) commandé par un programme de pilotage qui exécute les étapes du procédé de pilotage de l'une quelconque des revendications 1 à 8.

10. Station de travail selon la revendication 9, dans laquelle l'automate de pilotage (7) est associé à un dispositif d'entrée/sortie (9) agencé pour permettre une modification de paramètres du programme de pilotage.

11. Station de travail selon la revendication 9, dans laquelle le dispositif d'entrée/sortie comprend un écran (9).

12. Station de travail selon la revendication 11, dans laquelle l'écran (9) est tactile.

13. Station de travail selon la revendication 11, dans laquelle le programme permet l'affichage sur l'écran de fenêtres d'accès à des informations relatives aux unités opérationnelles.

14. Station de travail selon la revendication 13, dans laquelle les informations comprennent une image de l'unité opérationnelle, sur laquelle est identifié un élément dont un changement d'état est attendu.

15. Station de travail selon la revendication 13, dans laquelle les informations comprennent un historique des messages d'erreurs.

16. Station de travail selon la revendication 13, dans laquelle les informations comprennent un historique des états des unités opérationnelles.

17. Station de travail selon la revendication 13, dans laquelle les informations sont relatives aux performances de la station.

18. Station de travail selon la revendication 9, dans laquelle les unités opérationnelles incorporent des armoires de commande reliées à un réseau informatique.

19. Station de travail selon la revendication 18, dans laquelle le programme est agencé pour permettre d'accéder à des informations stockées dans les armoires de commande.

20. Station de travail selon la revendication 10, dans laquelle le dispositif d'entrée/sortie (9) est amovible.

21. Station de travail selon la revendication 20, dans laquelle le dispositif d'entrée/sortie (9) est agencé pour être connectable à un automate de pilotage d'une autre station de même type.

22. Station de travail selon la revendication 9, dans laquelle le robot (4) comporte six axes.

23. Station de travail selon la revendication 9, dans laquelle les unités opérationnelles comprennent un robot (5, 6) de soudage et un robot (4) manipulateur de pièces.

24. Station de travail selon la revendication 9, pour une ligne d'assemblage de carrosserie de véhicules automobiles.

## Patentansprüche

1. Verfahren zum Steuern mindestens einer Arbeitsstation (1), die operationale Einheiten (2, 3, 6) umfasst, die mindestens einen Roboter wie einen Schweißroboter umfassen, wobei die operationalen Einheiten mit einem Steuerautomaten (7) verbunden sind, der ein Steuerprogramm ausführt, wobei das Steuerprogramm für jede operationale Einheit mindestens einen Unterabschnitt umfasst, der eine Vielzahl von Aktionsverknüpfungen in Abhängigkeit von Synchronisationszuständen definiert, wobei das Steuerverfahren nach dem Kompilieren des Steuerprogramms eine Konfigurationsphase und eine Ausführungsphase des Steuerprogramms umfasst, wobei die Konfigurationsphase die Schritte des Auswählens der einzusetzenden Einheiten und des Parametrisierens der entsprechenden Unterabschnitte umfasst, indem die Verknüpfung von auszuführenden Aktionen und die dazugehörigen Synchronisationszustände ausgewählt werden, wobei die Ausführungsphase den Schritt des Ausführens des so konfigurierten Steuerprogramms umfasst.

2. Verfahren nach Anspruch 1, bei dem der Konfigurationsschritt mittels einer Rechenroutine zum Ändern von Parametern des Steuerprogramms ausgeführt wird, die so ausgebildet ist, dass sie einen Erfassungsbildschirm (11) zur Erfassung von Werten von Parametern anzeigt.

3. Verfahren nach Anspruch 2, bei dem der Erfassungsbildschirm (11) mindestens ein Kontextmenü (17) mit Mehrfachauswahl umfasst.

4. Verfahren nach Anspruch 3, bei dem der Erfassungsbildschirm (11) auf einer Tastanzeige (9) angezeigt wird.

5. Verfahren nach Anspruch 2, bei dem der Konfigurationsschritt auf dem Steuerautomaten (7) ausgeführt wird.

6. Verfahren nach Anspruch 1, bei dem der Konfigurationsschritt dadurch ausgeführt wird, dass eine Computerdatei mittels einer außerhalb der Station befindlichen Rechenmaschine in den Speicher des Steuerautomaten (7) geladen wird.

7. Verfahren nach Anspruch 1, bei dem das Steuerprogramm so ausgebildet ist, dass es während der Ausführungsphase die ausgeführten Aktionen und/oder Aktionen im Verlauf ihrer Ausführung anzeigt.

8. Verfahren nach Anspruch 1, bei dem das Steuerprogramm vor der Konfiguration für mindestens zwei Stationen (1) einer Fertigungslinie identisch ist.

9. Arbeitsstation (1), umfassend operationale Einheiten (2, 3), die mindestens einen Roboter umfassen, wobei die operationalen Einheiten mit einem Steuerautomaten (7) verbunden sind, der von einem Steuerprogramm gesteuert wird, das die Schritte des Steuerverfahrens eines der Ansprüche 1 bis 8 ausführt.

10. Arbeitsstation nach Anspruch 9, bei der der Steuerautomat (7) mit einer Eingabe-Ausgabe-Vorrichtung (9) verbunden ist, die so ausgebildet ist, dass sie eine Änderung der Parameter des Steuerprogramms ermöglicht.

11. Arbeitsstation nach Anspruch 9, bei der die Eingabe-Ausgabe-Vorrichtung einen Bildschirm (9) umfasst.

12. Arbeitsstation nach Anspruch 11, bei der der Bildschirm (9) taktil ist.

13. Arbeitsstation nach Anspruch 11, bei der das Programm auf dem Bildschirm die Anzeige von Fenstern zum Zugriff auf Informationen bezüglich der operationalen Einheiten ermöglicht.

14. Arbeitsstation nach Anspruch 13, bei der die Informationen ein Bild der operationalen Einheit umfassen, auf dem ein Element identifiziert ist, von dem ein Zustandswechsel erwartet wird.

15. Arbeitsstation nach Anspruch 13, bei der die Informationen eine Historie von Fehlermeldungen umfassen.

16. Arbeitsstation nach Anspruch 13, bei der die Informationen eine Historie der Zustände der operationalen Einheiten umfassen.

17. Arbeitsstation nach Anspruch 13, bei der die Informationen die Leistungen der Station betreffen.

18. Arbeitsstation nach Anspruch 9, bei der die operationalen Einheiten Schaltschränke enthalten, die mit einem Rechnernetz verbunden sind.

19. Arbeitsstation nach Anspruch 18, bei der das Programm so ausgebildet ist, dass es ein Zugreifen auf Informationen gestattet, die in den Schaltschränken gespeichert sind.

20. Arbeitsstation nach Anspruch 10, bei der die Eingabe-Ausgabe-Vorrichtung (9) abnehmbar ist.

21. Arbeitsstation nach Anspruch 20, bei der die Eingabe-Ausgabe-Vorrichtung (9) so ausgebildet ist, dass sie mit einem Steuerautomaten einer anderen Station gleicher Art verbunden werden kann.

22. Arbeitsstation nach Anspruch 9, bei der der Roboter (4) sechs Achsen umfasst.

23. Arbeitsstation nach Anspruch 9, bei der die operationalen Einheiten einen Schweißroboter (5, 6) und einen Roboter (4) zur Teilehandhabung umfassen.

24. Arbeitsstation nach Anspruch 9, für eine Montagereihe zur Montage von Kraftfahrzeugkarosserien.

## Claims

1. A method of controlling at least one work station (1) comprising operational units (2, 3, 6) comprising at least one robot such as a welding robot, the operational units being connected to a controller (7) executing a control program, the control program including, for each operational unit, at least one sub-portion that defines a plurality of sequences of actions as a function of synchronization states, the control method comprising once the control program is compiled a configuration stage and an execution stage for the control program, the configuration stage comprising the steps of selecting the units to be operated, setting parameter values in the corresponding sub-portions by selecting the sequence of actions to be performed and the associated synchronization states, with the execution stage comprising the step of executing the control program as configured in this way.

2. A method according to claim 1, in which the configuration stage is implemented by means of a computer routine for modifying parameters of the control program, which routine is arranged to display a screen (11) for inputting parameter values.

3. A method according to claim 2, in which the input screen (11) includes at least one multiple-choice context menu (17).

4. A method according to claim 3, in which the input screen (11) is displayed on a touch-sensitive display (9) .

5. A method according to claim 2, in which the configuration step is implemented on the controller (7).

6. A method according to claim 1, in which the configuration step is implemented by loading a computer file in the memory of the controller (7) from a computer machine external to the station.

7. A method according to claim 1, in which the control program is arranged, during the execution stage, to display actions that have been accomplished and/or actions that are in the process of being accomplished.

8. A method according to claim 1, in which the control program prior to configuration is identical for at least two stations (1) in a production line.

9. A work station (1) comprising operational units (2, 3) comprising at least one robot, the operational units being connected to a controller (7) controlled by a control program, that executes the steps of the method of controlling according to any of claims 1 to 8.

10. A work station according to claim 9, in which the controller (7) is associated with an I/O device (9) arranged to enable the parameters of the control program to be modified.

11. A work station according to claim 9, in which the I/O device comprises a screen (9).

12. A work station according to claim 11, in which the screen (9) is a touch-sensitive screen.

13. A work station according to claim 11, in which the program enables windows to be displayed on the screen giving access to information about the operational units.

14. A work station according to claim 13, in which the information comprises an image of the operational units with an element thereon for which a change-of-state is expected being identified.

15. A work station according to claim 13, in which the information comprises a history of error messages.

16. A work station according to claim 13, in which the information comprises a history of operational unit states.

17. A work station according to claim 13, in which the information relates to the performance of the work station.

18. A work station according to claim 9, in which the operational units incorporate control cabinets connected to a computer network.

19. A work station according to claim 18, in which the program is arranged to provide access to information stored in the control cabinets.

20. A work station according to claim 10, in which the I/O device (9) is removable.

21. A work station according to claim 20, in which the I/O device (9) is arranged to be connectable to a controller of another work station of the same type.

22. A work station according to claim 9, in which the robot (4) has six axes.

23. A work station according to claim 9, in which the operational units comprise a welding robot (5, 6), and a workpiece handling robot (4).

24. A work station according to claim 9, for a motor vehicle bodywork assembly line.
